(19) Europäisches Patentamt
European Patent Office
Office européen des brevets

(11) **EP 3 161 445 B1**

(12) **EUROPÄISCHE PATENTSCHRIFT**

(45) Veröffentlichungstag und Bekanntmachung des Hinweises auf die Patenterteilung:
**17.06.2020 Patentblatt 2020/25**

(21) Anmeldenummer: **15738006.4**

(22) Anmeldetag: **29.06.2015**

(51) Int Cl.:
**G01L 25/00** *(2006.01)*     **B25B 23/00** *(2006.01)*

(86) Internationale Anmeldenummer:
**PCT/EP2015/064760**

(87) Internationale Veröffentlichungsnummer:
**WO 2016/001175 (07.01.2016 Gazette 2016/01)**

(54) **PRÜFVORRICHTUNG ZUM PRÜFEN VON SCHRAUBSYSTEMEN UND PRÜFVERFAHREN DAFÜR**

TESTING DEVICE FOR TESTING SCREW SYSTEMS, AND TESTING METHOD FOR THIS PURPOSE

DISPOSITIF DE TEST POUR TESTER DES SYSTÈMES À VIS ET PROCÉDÉ DE TEST POUR CELUI-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.06.2014 DE 102014212656**

(43) Veröffentlichungstag der Anmeldung:
**03.05.2017 Patentblatt 2017/18**

(73) Patentinhaber: **Robert Bosch GmbH**
**70442 Stuttgart (DE)**

(72) Erfinder: **LUDWIG, Michael**
**66903 Dittweiler (DE)**

(56) Entgegenhaltungen:
**DE-A1-102011 054 964     DE-U1-202011 050 771**

**Beschreibung**

Die Erfindung betrifft eine Prüfvorrichtung zum Prüfen von Schraubspindeln oder Schraubsystemen, welche zur Montage von Schraubverbänden oder Schraubstellen vorgesehen sind, und ein Prüfverfahren dafür.

Stand der Technik

Zur zyklischen Überprüfung und Justierung von elektrischen Schraubspindeln oder Schraubsystemen, welche insbesondere in Montagelinien bzw. Fertigungsstraßen zur Montage von Schraubstellen bzw. Schraubverbänden eingesetzt werden, werden sog. rückgeführte Sensoren zur Drehwinkel- und/oder Drehmomenterfassung oder auch zur kombinierten Drehmoment-DrehwinkelErfassung verwendet. Dabei erfolgt eine Bewertung der zu prüfenden Schraubsysteme durch Vergleichen von Mess- bzw. Anzeigewerten des zu prüfenden Schraubsystems mit dazu korrespondierenden Mess- bzw. Anzeigewerten des zur Anwendung kommenden rückgeführten Sensors, welcher zu diesem Zweck in der Regel zwischen dem Abtrieb der Schraubspindel des zu prüfenden Schraubsystems und einer Schraubstelle bzw. eines Schraubverbands oder dergleichen angeordnet bzw. adaptiert ist. Beim Prinzip des rückgeführten Sensors wird die relevante Messgröße auf ein nationales oder internationales Normal rückgeführt. Dadurch ergibt sich einerseits ein mit relativ hohem Kostenaufwand verknüpfter komplexer Messaufbau, welcher in einer Fertigungsstraße nur mit enormem Aufwand realisierbar ist, und andererseits ein hoher Messaufwand, da zwei getrennte Messreihen zur Bewertung des zu prüfenden Schraubsystems erforderlich sind. Insbesondere bei solchen rückgeführten Meßsystemen, die zur Erfassung zweier Kenngrößen, also sowohl zur Drehmoment- wie auch zur Drehwinkelerfassung, geeignet sind, ist aufgrund der hohen Komplexität des Messaufbaus ein Prüfbetrieb nahezu ausschließlich unter Laborbedingungen realisierbar.

Aus der DE 20 2011 050 771 U1 ist eine Kalibriervorrichtung für elektronische Drehmomentschlüssel bekannt. Sie umfasst eine Basis, ein Antriebselement, wobei ein Ende des Antriebselementes durch einen elektronischen Drehmomentschlüssel angetrieben wird und wobei das andere Ende des Antriebselements drehbar mit der Basis verbunden ist, ein Drehmoment festlegendes Element, das auf der Basis angeordnet ist, wobei das Drehmoment festlegende Element für das Antriebselement einen voreingestellten Widerstand gegen eine Drehung bereitstellt, und eine Skalenscheibe.

Vorteile der Erfindung

Die Prüfvorrichtung mit den Merkmalen des Patentanspruchs 1 hat den Vorteil, dass ein relativ einfacher Messaufbau bei niedrigem Kostenaufwand realisierbar ist, wobei eine hohe Genauigkeit bei der Prüfung und Bewertung eines zu prüfenden Schraubsystems erzielbar ist, indem der Grundgedanke der Erfindung darin besteht, mittels eines Torsionselements eine auf ein physikalisches Gesetz rückgeführte Kennlinie als Normal dem Drehmomentverlauf einer zu prüfenden Schraubspindel mechanisch aufzuprägen, um anhand der Auswertung des von der Schraubspindel während des Prüfvorgangs ausgeführten Drehmomentverlaufs und der darin abgebildeten Kennlinie eine außerhalb einer vorgegebenen Toleranz liegende Performance der Schraubspindel erkennen und bestimmen zu können. Dabei erfolgt dieses Aufprägen als mechanische Rückkopplung bzw. mechanisches Antwortverhalten der Prüfvorrichtung auf die von der Schraubspindel auf das Torsionselement der Prüfvorrichtung ausgeübten Kräfte gemäß dem Drehmomentverlauf der Schraubspindel. Dazu ist vorgesehen, dass das Torsionselement mit einer vorbestimmten Vorspannung versehen in einem Grundkörper aufgenommen ist und dazu dient, bei Einwirken eines von einer zu prüfenden Schraubspindel bewirkten Drehmomentverlaufs auf das Torsionselement eine Federkennlinie des Torsionselements dem Drehmomentverlauf der Schraubspindel aufzuprägen, wobei die Federkennlinie des Torsionselements durch eine erste Anschlagstellung und eine zweite Anschlagstellung festgelegt ist, wobei Mittel vorgesehen sind, um den Drehmomentverlauf der Schraubspindel charakterisierende Messdaten auszuwerten, wobei anhand der ausgewerteten Messdaten und der darin aufgeprägten Federkennlinie die Federkennlinie festlegende und mit den Anschlagstellungen korrespondierende Stützstellen des Drehmomentverlaufs als Maß zum Bewerten eines von der Norm abweichenden Verhaltens der Schraubspindel dient.

Weitere vorteilhafte Weiterbildungen und Ausgestaltungen der Erfindung ergeben sich durch die in den Unteransprüchen aufgeführten Maßnahmen.

Indem das Torsionselement aus seiner ersten Anschlagstellung heraus bis zu einer zweiten Anschlagstellung bewegbar ist, bei der eine zweite Anschlagfläche des Torsionselements gegen eine zweite Anschlagfläche des Grundkörpers anschlägt, erfolgt eine Verdrehung des Torsionskörpers innerhalb von zwei Anschlagstellungen. Diese beiden Anschlagstellungen definieren mithin die Federkennlinie der Prüfvorrichtung. Dabei ist in Ruhestellung des Torsionselements, d.h. in seiner ersten Anschlagstellung, zwischen seiner zweiten Anschlagfläche und der dazu korrespondierenden Anschlagfläche des Grundkörpers eine Abstandslücke vorhanden, welche den maximalen Messbereich der Prüfvorrichtung festlegt.

Gemäß einer weiterbildenden Maßnahme der Erfindung ist vorgesehen, dass ein Ende des Torsionselements mittels eines Einstellkörpers an dem Grundkörper kraftschlüssig verankert ist. Dadurch ist es möglich, die vorbestimmte Vorspannung, mit der das Torsionselement in dem Grundkörper aufgenommen ist, definiert beispielsweise mit einem drehmomentgesteuerten Werkzeug frei wählbar aufzubringen. Dazu ist das Ende des Torsionselements in dem Einstellkörper drehfest verankert, wobei der Einstellkörper mit dem Grundkörper verbunden ist.

Indem das Torsionselement einen sich längsaxial erstreckenden länglichen Schaftbereich aufweist, dient der Schaftbereich dazu, das von außen einwirkende Drehmoment aufzunehmen, wobei eine Torsion des Schaftbereichs erfolgt.

Gemäß einer besonders zweckmäßigen Ausführungsform der Erfindung verläuft die Längsmittelachse des Torsionselements koaxial zur Längsmittelachse des Grundkörpers, so dass sich im Wesentlichen eine einfache Konstruktion ergibt.

Eine besonders stabile Ausführungsform der Erfindung sieht vor, dass das Torsionselement einstückig ausgebildet ist.

Ein Verfahren zum Prüfen von Schraubspindeln oder Schraubsystemen unter Verwendung einer derartigen Prüfvorrichtung umfasst die Schritte des Einleitens eines Drehmomentsverlaufs einer zu prüfenden Spindel in die Prüfvorrichtung, und des Auswertens von den Drehmomentverlauf charakterisierenden Messdaten der zu prüfenden Schraubspindel, wobei anhand der ausgewerteten Messdaten und der darin aufgeprägten Federkennlinie mit Anschlagstellungen korrespondierende und die Federkennlinie festlegende Stützstellen des Drehmomentverlaufs als Maß zum Bewerten eines von der Norm abweichenden Verhaltens der Schraubspindel ermittelt wird. Dazu wird die dem Drehmomentverlauf aufgeprägte Federkennlinie des Torsionselements der Prüfvorrichtung anhand von Fixpunkten bestimmt, wobei die Fixpunkte als mit den Anschlagstellungen des Torsionselements korrespondierende charakteristische Stützstellen zur Berechnung einer Abweichung der Schraubspindel von der Norm bei vorbekannter Eigentorsion und vorbekanntem Schlupf anhand der nachstehenden Gleichung herangezogen werden:

$$W3 = (W2 \cdot W1) - ((M2 - M1) \bullet tsf)$$

Dabei sind mit W3 die Abweichung der Schaubspindel, mit den Größen M1 und W1 das Drehmoment und der zugehörige Drehwinkel einer ersten charakteristischen Stützstelle und mit den Größen M2 und W2 das Drehmoment und der zugehörige Drehwinkel einer zweiten charakteristischen Stützstelle sowie mit tsf die Eigentorsion und der Schlupf der Schraubspindel bezeichnet.

Zeichnungen

Ausführungsbeispiele der Erfindung sind in der nachfolgenden Beschreibung und in den beigefügten Zeichnungen näher erläutert. Letztere zeigen in schematisch gehaltenen Ansichten:

Fig. 1 einen Teillängsschnitt durch die erfindungsgemäße Prüfvorrichtung mit einem Grundkörper, einem darin aufgenommen Torsionskörper und einer mit dem Torsionskörper drehfest verbundenen Einstellscheibe,

Fig. 2 eine Seitenansicht der Prüfvorrichtung von Fig. 1,

Fig. 3 einen Querschnitt gemäß Schnittlinie I-I in Fig. 2 durch die Prüfvorrichtung,

Fig. 4 eine perspektivische Ansicht der Prüfvorrichtung von Fig. 1,

Fig. 5 eine perspektivische Ansicht der teilweise aufgeschnittenen Prüfvorrichtung von Fig. 1,

Fig. 6 eine perspektivische Ansicht eines Grundkörpers als Teil der Prüfvorrichtung,

Fig. 7 eine perspektivische Ansicht des Torsionsstabs als Teil der Prüfvorrichtung,

Fig. 8 den Querschnitt gemäß Schnittlinie I-I in Fig. 1 durch den Grundkörper und den darin eingebauten Torsionsstab der Prüfvorrichtung in einer stark vergrößerten Darstellung,

Fig. 9 ein Messdiagramm, bei welchem der Drehmomentverlauf M einer Schraubspindel in Abhängigkeit vom Drehwinkel φ aufgetragen ist, wobei die anhand der Schraubspindel aufgenommene Messkurve in ihrem mittleren Abschnitt von einer charakteristischen Kennlinie der erfindungsgemäßen Prüfvorrichtung geprägt ist,

Fig. 10 ein Messdiagramm, welches zum Ermitteln der Eigentorsion und des Schlupfs der Schraubspindel bei blockierter Prüfvorrichtung dient, wobei der Drehmomentverlauf M in Abhängigkeit vom Drehwinkel φ der Schraubspindel aufgetragen ist,

Fig. 11 ein Messdiagramm, das zum Kalibrieren der erfindungsgemäßen Prüfvorrichtung dient, wobei mittels einer rückgeführten Referenzeinrichtung der Drehmomentverlauf M in Abhängigkeit vom Drehwinkel φ der Schraubspindel aufgetragen ist, wobei die mittels der rückgeführten Referenzeinrichtung aufgenommene Messkurve in ihrem mittleren Abschnitt die Kennlinie der Prüfvorrichtung aufweist,

Fig. 12 ein Messdiagramm, das zur kalibrierten Ermittlung der Eigentorsion und des Schlupfs einer Schraubspindel bei blockierter Prüfvorrichtung dient, wobei der Drehmomentverlauf M der Schraubspindel in Abhängigkeit vom Drehwinkel φ mittels einer rückgeführten Referenzeinrichtung aufgetragen ist,

Fig. 13 eine Prinzipskizze mit der an eine zu überprüfende Schraubspindel angeschlossenen Prüfvorrichtung gemäß einer ersten Ausführungsform, und

Fig. 14 eine Prinzipskizze mit der an eine zu überprüfende Schraubspindel angeschlossenen Prüfvorrichtung gemäß einer zweiten Ausführungsform.

Beschreibung der Ausführungsformen

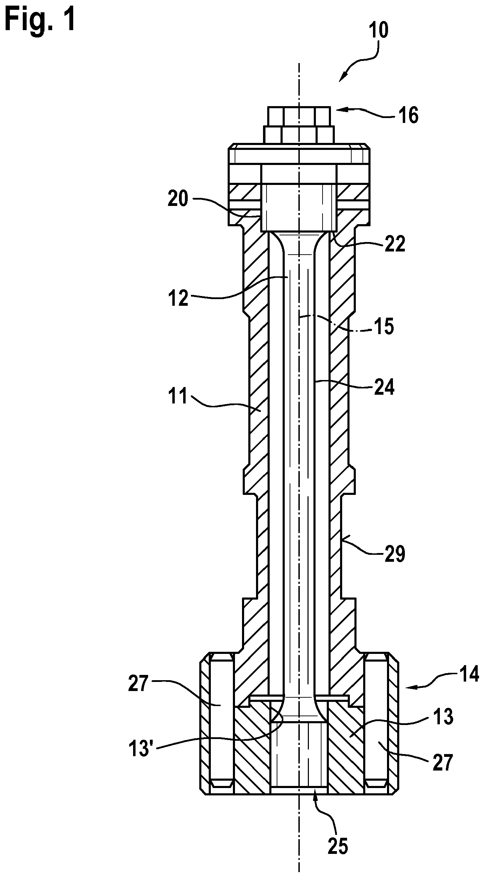

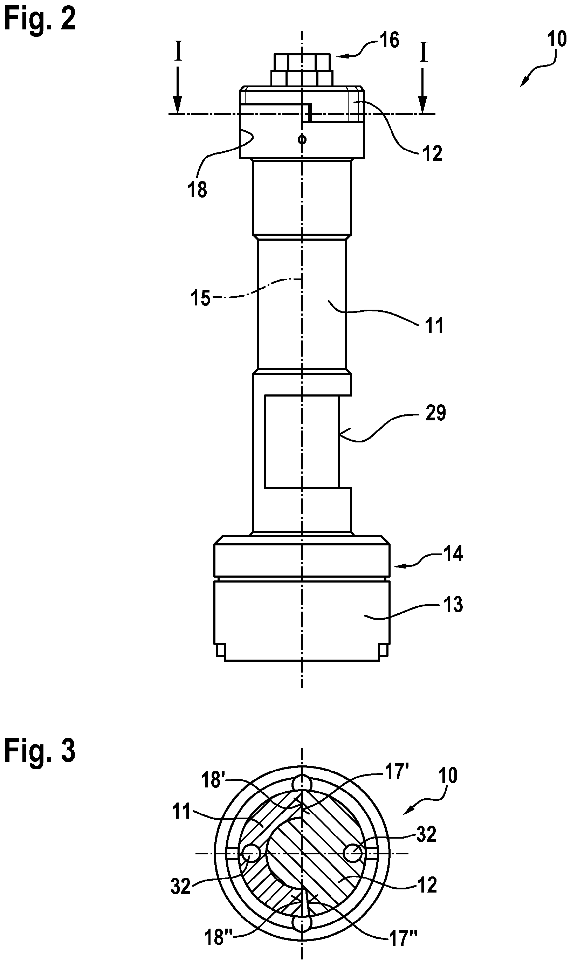

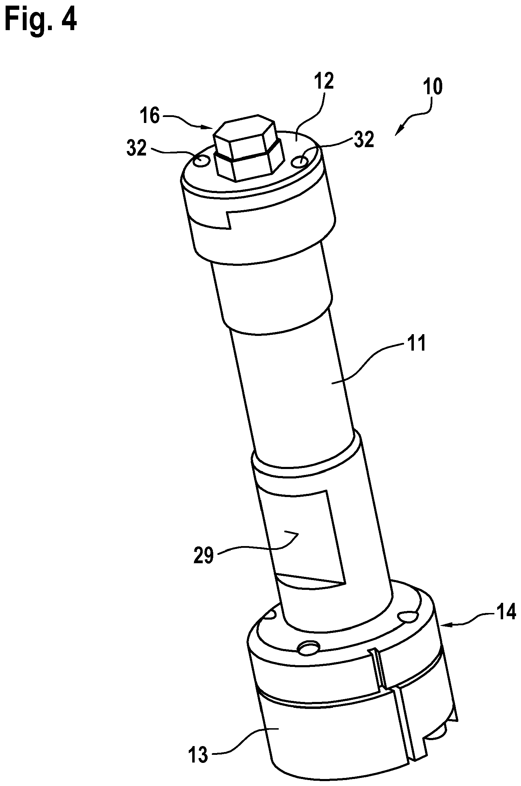

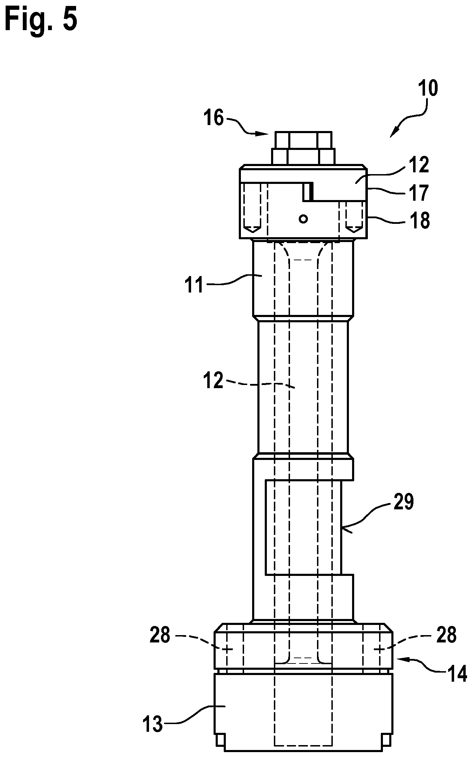

Fig. 1 bis 5 zeigen die erfindungsgemäße Prüfvorrichtung 10, welche zum Anschluss an eine Schraubspindel geeignet ist. Die Prüfvorrichtung 10 weist einen Grundkörper 11, einen Torsionskörper 12, der in dem Grundkörper 11 aufgenommen ist, und eine Einstellscheibe 13 auf, welche am unteren Ende 14 des Grundkörpers 11 befestigt ist. Der einstückig ausgebildete Torsionskörper 12 ist koaxial zur Längsmittelachse 15 der Prüfvorrichtung 10 in dem Grundkörper 11 aufgenommen, wobei das sechskantig ausgebildete obere Ende 16 des Torsionskörpers 12 aus dem Grundkörper 11 nach oben herausragt und zur Ankopplung bzw. Adaptierung an eine Schraubspindel dient. Unterhalb des oberen Endes 16 weist der Torsionskörper 12 einen durchmesserverbreiterten Absatz 17 mit zwei in Umfangsrichtung voneinander beabstandeten Anschlagflächen 17' und 17" auf, welche mit zwei Anschlagflächen 18' und 18" korrespondieren, welche der Grundkörper 11 an seinem oberen Absatz 18 aufweist. Der Absatz 17 des Torsionskörpers 12 geht über in eine durchmesserkleinere Ringschulter 20, die auf einer Lagerstelle 22 aufliegt, die als Stufe innen im oberen Absatz 18 des Grundkörpers 11 ausgebildet ist. Ausgehend von dem oberen Ende 16 erstreckt sich der Torsionskörper 12 in seiner Längsrichtung über den verbreiterten Absatz 17, die Ringschulter 20, eine sich konusförmig verjüngende Stufe 23 und einem durchmesserkleineren zylinderförmigen Schaftabschnitt 24 zu einem radial verdickten unteren Ende 25. Mit seinem oberen Absatz 17 liegt der Torsionskörper 12 auf dem Absatz 18 des Grundkörpers 11 auf, während das untere Ende 25 des Torsionskörpers 12 in eine zentrale axial verlaufende Öffnung 13' der Einstellscheibe 13 eingesteckt bzw. eingeschrumpft ist und der Torsionskörper 12 dadurch kraftschlüssig und drehfest mit der Einstellscheibe 13 verbunden ist. In diesem Zustand wird die Einstellscheibe 13, die an dem Endabschnitt 14 des Grundkörpers 11 anliegt, gegenüber dem Endabschnitt 14 um ein bestimmtes Maß verdreht und eine Vorspannung erzeugt, unter deren Einfluss sich der mitgeführte Torsionskörper 12 verdreht, so dass dessen erste Anschlagfläche 17' gegen die erste Anschlagfläche 18' des Grundkörpers 11 in Anschlag gestellt ist. In dieser Stellung wird die Einstellscheibe 13 an dem Endabschnitt 14 mittels Passstiften 27 arretiert, die dazu am Außenrand der Einstellscheibe 13 ausgebildete Durchgangsbohrungen durchgreifen und mit ihren Enden in Aufnahmelöcher in der Randzone des Endabschnitts 14 eingreifen und dadurch verankert werden. Dadurch ist die Einstellscheibe 13 mit dem Grundkörper 11 kraft- und formschlüssig verbunden. In einem mittleren Abschnitt des Grundkörpers 11 sind in dessen Außenumfang eingefräste Angriffsflächen 29 ausgebildet, die zur Aufnahme der Prüfvorrichtung 10 in eine Maschine dienen.

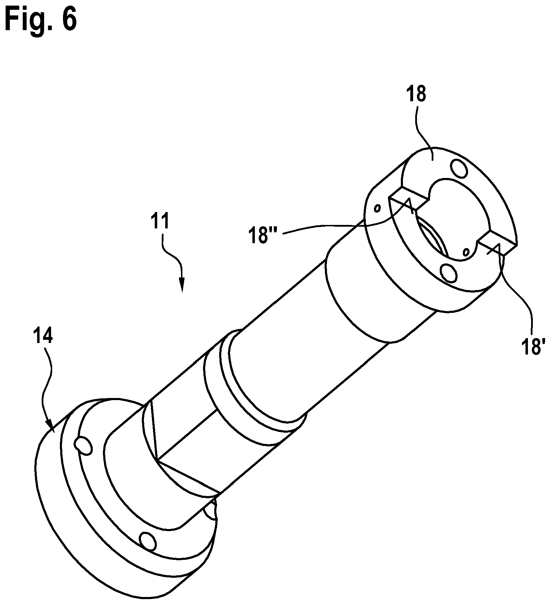

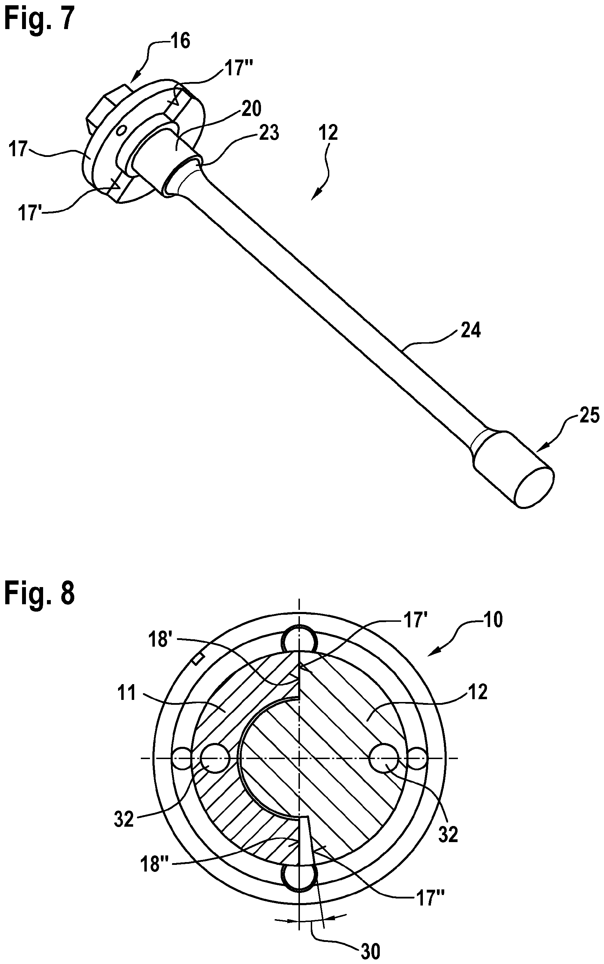

Fig. 6 veranschaulicht den Grundkörper 11 der erfindungsgemäßen Prüfvorrichtung 10, wobei der obere Absatz 18 des Grundkörpers 11 einen kragenförmig nach oben vorstehenden Bereich aufweist, der konzentrisch zur Längsmittelachse 15 verläuft und sich als Ringsegment in Umfangsrichtung über einen Winkelbereich erstreckt, der durch die beiden Anschlagflächen 18' und 18" begrenzt ist und 180° beträgt. Fig. 7 veranschaulicht den Torsionskörper 12 der erfindungsgemäßen Prüfvorrichtung 10, wobei der Absatz 17 des Torsionskörpers 12 einen kragenförmig nach unten vorstehenden Bereich aufweist, der konzentrisch zur Längsmittelachse 15 verläuft und sich als Ringsegment in Umfangsrichtung über einen Winkelbereich erstreckt, der durch die beiden Anschlagflächen 17' und 17" begrenzt ist und um etwa 9° kleiner als 180° bemessen ist. Fig. 8 zeigt in einer Querschnittdarstellung die erfindungsgemäße Prüfvorrichtung 10 im zusammengebauten Zustand, bei dem der Torsionskörper 12 in dem Grundkörper 11 unter Vorspannung eingebaut ist. Dadurch ist die erste Anschlagfläche 17' des Absatzes 17 des Torsionskörpers 12 gegen die erste Anschlagfläche 18' des Absatzes 18 des Grundkörpers 11 formschlüssig in Anschlag gestellt. Aufgrund der unterschiedlichen Ausbildung der Absätze 17, 18 ergibt sich eine Abstandslücke 30 zwischen den beiden in Umfangsrichtung gegenüberstehenden Anschlagflächen 17", 18" mit einem Winkelversatz, der im Ausführungsbeispiel etwa 9° beträgt. Diese Abstandslücke 30 definiert den Messbereich der Prüfvorrichtung 10, da der Torsionskörper 12 gemäß dem gewählten Ausführungsbeispiel um 9° verdrehbar ist.

In an eine zu überprüfende Schraubspindel angekoppelter bzw. adaptierter Stellung der Prüfvorrichtung 10, in welcher die Spindel an dem sechskantigen Ende 16 der Prüfvorrichtung 10 angreift, fährt die Schraubspindel schrittweise einen Drehwinkelbereich durch und misst dabei für jeden eingestellten Drehwinkel das jeweils zum Drehen der Prüfvorrichtung 10 aufgebrachte Drehmoment. Aufgrund des von der Schraubspindel aufgebrachten Drehmoments erfolgt eine weitere Torsion des bereits in dem Grundkörper 11 vorgespannt eingebauten Torsionskörpers 12 um seine eigene Längsmittelachse 15. Dabei nimmt im Wesentlichen der sich längs der Längsmittelachse 15 erstreckende längliche Schaftbereich 24 des Torsionskörpers 12 die Schubkräfte durch Verdrillung bzw. Torsion um die Längsmittelachse auf. Erreicht die Schraubspindel einen Drehmomentwert, der größer als die Vorspannung des Torsionskörpers 12 ist, so löst sich die erste Anschlagfläche 17' des Torsionskörpers 12 von der ersten Anschlagfläche 18' des Grundkörpers 11 und in gleichem Maße bewegt sich die zweite Anschlagfläche 17" des Torsionskörpers 12 zur zweiten Anschlagfläche 18" des Grundkörpers 11 hin, so dass sich die Abstandslücke bzw. der Winkelversatz 30 zwischen den beiden Anschlagflächen 17" und 18" verringert. Das von der Schraubspindel aufgebrachte Drehmoment arbeitet also gegen den Widerstand des vorgespannten Torsionskörpers 12. Das Drehmoment wird schrittweise solange erhöht, bis die zweite Anschlagfläche 17" des Absatzes 17 an die zweite Anschlagfläche 18" des Absatzes 18 anschlägt.

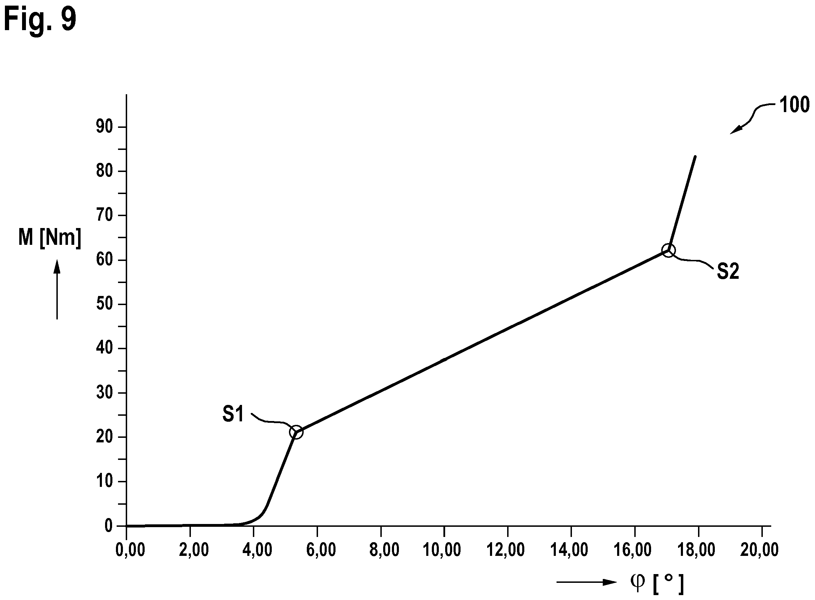

Fig. 9 zeigt ein Messdiagramm 100 für eine an eine Schraubspindel eines Schraubsystems angeschlossene bzw. adaptierte erfindungsgemäße Prüfvorrichtung 10, wobei der Drehmomentverlauf M (in Einheiten von Nm) der Schraubspindel in Abhängigkeit vom Drehwinkel $\varphi$ (in Grad) aufgetragen ist. Die von der Schraubspindel erfasste und im Messdiagramm 100 wiedergegebene Messkurve ist im Wesentlichen in drei Abschnitte unterteilt; ein erster Abschnitt der Messkurve erstreckt sich bis zum Messpunkt S1 und ist dadurch charakterisiert, dass das bis dahin bei kleinen Drehwinkeln $\varphi$ von der Schraubspindel aufgebrachte Drehmoment M kleiner als die Vorspannung des Torsionskörpers 12 bemessen ist, so dass die Anschlagfläche 17' des Torsionskörpers 12 noch nicht von der Anschlagfläche 18' des Grundkörpers 11 abheben kann. Dieser erste Abschnitt ist nichtlinear ausgebildet und überstreicht einen Drehwinkelbereich von 0.00° bis etwa 5.10°. Erst wenn das von der Schraubspindel aufgebrachte Drehmoment M größer oder gleich der Vorspannung des Torsionskörpers 12 ist, geht die Messkurve in den zweiten bzw. mittleren Abschnitt über, welcher sich von dem Messpunkt S1 bis zum Messpunkt S2 erstreckt und in diesem Drehwinkelbereich von 5.2° bis 16.8° exakt linear ausgebildet ist, da sich in diesem Abschnitt die Federschnitt die Federkennlinie des Torsionskörpers im Drehmomentverlauf der Schraubspindel abbildet. Mithin handelt es sich dabei um ein mechanisches Antwortverhalten des Torsionskörpers auf den von der Schraubspindel auf ihn ausgeübten Drehmomentverlauf, d.h. das Antwortverhalten des Torsionskörpers manifestiert sich darin, dass sich die für den Torsionskörper charakteristische Federkennlinie dem Drehmomentverlauf der Schraubspindel aufprägt. Die Prüfvorrichtung fungiert somit als Verkörperung eines mechanischen Normals. Ausweislich des Messdiagramms 100 ist gemäß dem Ausführungsbeispiel der Messpunkt S1 definiert durch einen Drehmomentwert M1 = 22.6 Nm und einen Drehwinkel W1 = 5.2°, während der Messpunkt S2 definiert ist durch einen Drehmomentwert M2 = 62.5 Nm bei einem Drehwinkel W2 = 16.8°. Bei dem Messpunkt S2 schlägt die Anschlagfläche 17" des Torsionskörpers 12 an die Anschlagfläche 18" des Grundkörpers 11 an, so dass bei größeren Drehwinkeln $\varphi$ > 16.8° und höheren Drehmomentwerten die Messkurve in den dritten Abschnitt übergeht, der nichtlinear ausgebildet ist. Die Messpunkte S1(M1, W1) und S2(M2, W2) sind charakteristische Knickpunkte in der Messkurve und begrenzen somit den linearen Abschnitt, der die Federkennlinie des Torsionskörpers 12 wiederspiegelt. Der Messbereich der Prüfvorrichtung 10 wird somit durch das Konstruktionsmerkmal der Abstandslücke 30 bestimmt, die im gewählten Ausführungsbeispiel, wie aus Fig. 8 ersichtlich ist, 9° beträgt. Anhand der beiden Messpunkte S1 und S2 ist die Abweichung bzw. der Fehler W3 der Schraubspindel ermittelbar, wobei die nachstehende Gleichung gilt:

$$W3 = (W2 - W1) - ((M2 - M1) \bullet tsf) \qquad \text{Gleichung (1),}$$

wobei mit tsf die Eigentorsion und der Schlupf der Schraubspindel bezeichnet ist, die bei deren Abweichung zu berücksichtigen ist.

Gemäß einer nicht erfindungsgemäßen Ausführungsform ist eine Abweichung bzw. ein Fehler der zu prüfenden Schraubspindel jedoch schon durch einen Vergleich des am - die Einsatzschwelle der Federkennlinie definierenden - Messpunkt S1 ermittelten Drehmomentwerts M1 mit der an der Prüfvorrichtung 10 eingestellten vorbestimmten Vorspannung erkennbar; wenn nämlich der Drehmomentwert M1 von dem an der Prüfvorrichtung eingestellten Vorspannungswert abweicht, dann arbeitet die zu prüfende Schraubspindel fehlerhaft und muß nachjustiert werden.

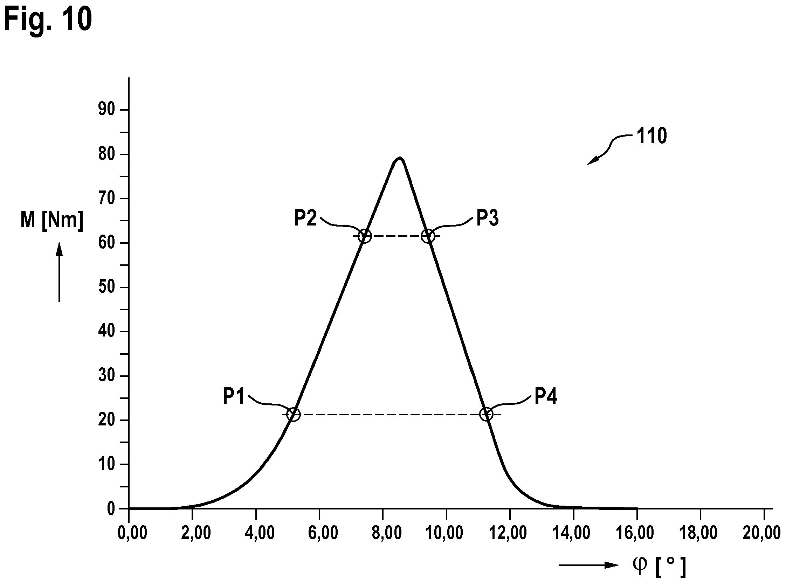

Fig. 10 zeigt ein Messdiagramm 110 zum Ermitteln der Eigentorsion tsf und des Schlupfs sf der Schraubspindel, wobei der Drehmomentverlauf M in Abhängigkeit vom Drehwinkel φ der Schraubspindel aufgetragen ist. Dazu wird der Torsionskörper 12 in der Prüfvorrichtung 10 blockiert, indem Stifte in Löcher 32 eingesetzt werden, die im Absatz 17 des Torsionskörpers 12 und im Absatz 18 des Grundkörpers 11 ausgebildet sind, so dass eine Verdrehung des Torsionskörpers relativ zum Grundkörper blockiert ist und die erste Anschlagfläche 17' nicht mehr von der zugeordneten Anschlagfläche 18' abheben kann. Dadurch wirkt das von der Schraubspindel eingeleitete bzw. aufgebrachte Drehmoment nur auf den Grundkörper 11 der Prüfvorrichtung 10, so dass die Messkurve im Messdiagramm 110 einen Drehmomentanstieg und einen Drehmomentabfall wiedergibt. Dabei ist der linksseitige Bereich der Messkurve mit den Messpunkten P1 und P2 charakterisiert durch die Eigentorsion und den Schlupf tsf der Schraubspindel, während der rechtsseitige Bereich der Messkurve nur noch durch den Eigentorsionsanteil der Schraubspindel charakterisiert ist. Um die Messpunkte P1 und P2 im linksseitigen Messkurvenbereich zu bestimmen, werden diejenigen Messpunkte in der Messkurve von Fig. 10 gesucht, die hinsichtlich des jeweiligen Drehmomentwerts mit den Messpunkten S1 und S2 in Fig. 9 zumindest annähernd übereinstimmen. Da der Messpunkt S1 (in Fig. 9) bei einem Drehmomentwert MT1 = 22.4 Nm und einem Drehwinkel WT1 = 5.2° liegt, während der zu Messpunkt S2 (M2 = 62.5 Nm) korrespondierende Messpunkt P2 in Fig. 10 einen Drehmomentwert MT2 = 61.2 Nm bei einem Drehwinkel WT2 = 7.55° aufweist. Die Messpunkte P3 und P4 in dem rechtsseitigen Messkurvenbereich dienen zur Bestimmung des Schlupfs und stimmen mit den Messpunkten P1 und P2 hinsichtlich des jeweiligen Drehmomentwerts überein; mithin sind P3 durch das Wertepaar (WT = 0.5°; MT3 = 61.8 Nm) und P4 durch das Wertepaar (11.24°; 22.4 Nm) festgelegt. Da die Messkurve in den Abschnitten zwischen P1 und P2 und zwischen P3 und P4 linear verläuft, sind sowohl die Eigentorsion tsf als auch der Schlupf sf der Schraubspindel anhand der beiden nachstehenden Gleichungen bestimmbar:

$$tsf = \frac{WT2 - WT1}{MT2 - MT1} \qquad\qquad \text{Gleichung (2)}$$

Dabei ist mit WT1 und MT1 der Drehwinkel und das Drehmoment des Messpunkts P1 und mit WT2 und MT2 der Drehwinkel und das Drehmoment des Messpunkts P2 bezeichnet.

Für den Schlupf der Schraubspindel gilt die nachstehende Beziehung:

$$sf = (WT2 - WT1)\text{-}(WT4 - WT3) \qquad\qquad \text{Gleichung (3),}$$

wobei mit WT3 und WT4 der jeweilige Drehwinkel der Messpunkte P3 und P4 bezeichnet ist.

Die Auswertung der Messkurve in Fig. 10 ergibt anhand der Gleichungen (2) und (3) für tsf = 0.0605 Grad/Nm und für sf = 0.6°.

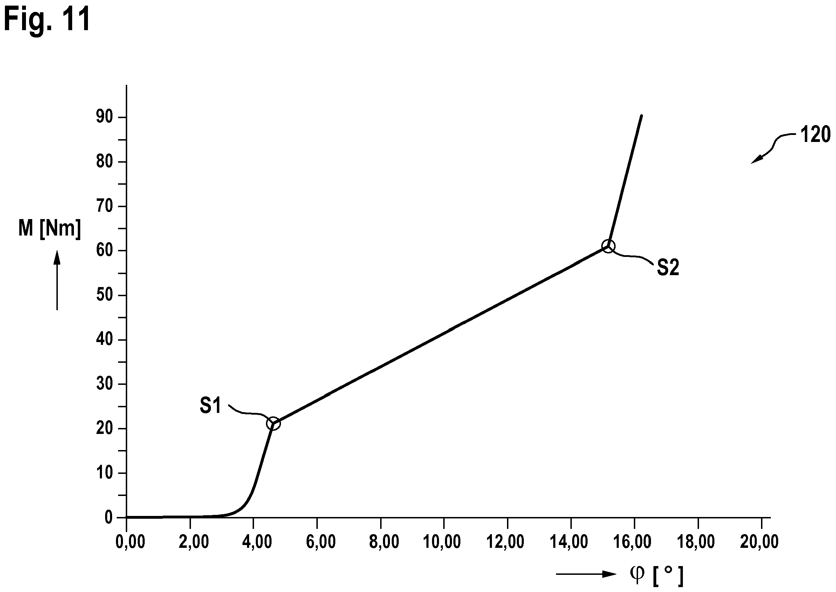

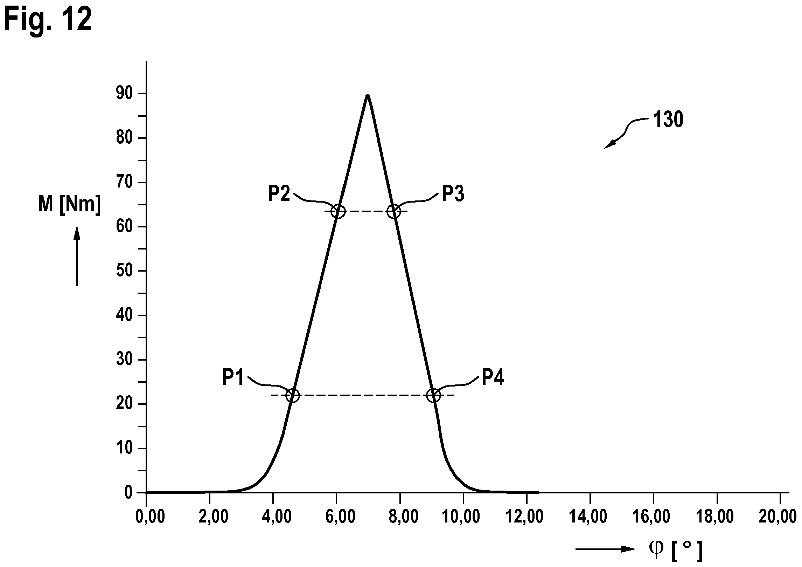

Damit die Prüfvorrichtung 10 als Normal arbeiten kann, ist lediglich eine einmalige Kalibrierung erforderlich, die anhand der Fig. 11 und 12 dargestellten Messdiagramme erläutert wird.

Fig. 11 zeigt ein mittels einer rückgeführten Referenzeinrichtung aufgenommenes Messdiagramm 120 zum - einmaligen - Kalibrieren der erfindungsgemäßen Prüfvorrichtung 10, die an eine Schraubspindel angeschlossen bzw. adaptiert ist, wobei der Drehmomentverlauf M der Schraubspindel in Abhängigkeit vom Drehwinkel aufgetragen ist. Diese Kalibrierung ist für die erfindungsgemäße Prüfvorrichtung 10 nur einmalig durchzuführen. Dabei werden - im Unterschied zu den in Fig. 9 und Fig. 10 dargestellten Messdiagrammen - die Messdaten, d.h. der jeweilige Drehwinkel und der jeweils zugeordnete Drehmomentwert von der rückgeführten Referenzeinrichtung erfasst.

Fig. 12 zeigt ein mittels einer rückgeführten Referenzeinrichtung aufgenommenes Messdiagramm 130 zum kalibrierten Ermitteln der Eigentorsion und des Schlupfs einer Schraubspindel, wobei der Drehmomentverlauf M in Abhängigkeit vom Drehwinkel φ aufgetragen ist. Die Messdaten, d.h der jeweilige Drehwinkel und der jeweils zugeordnete Drehmomentwert werden - im Unterschied zu den in Fig. 9 und Fig. 10 dargestellten Messdiagrammen - von der rückgeführten Referenzeinrichtung erfasst. Die Prüfvorrichtung 10 ist während der Durchführung der Messung mechanisch blockiert.

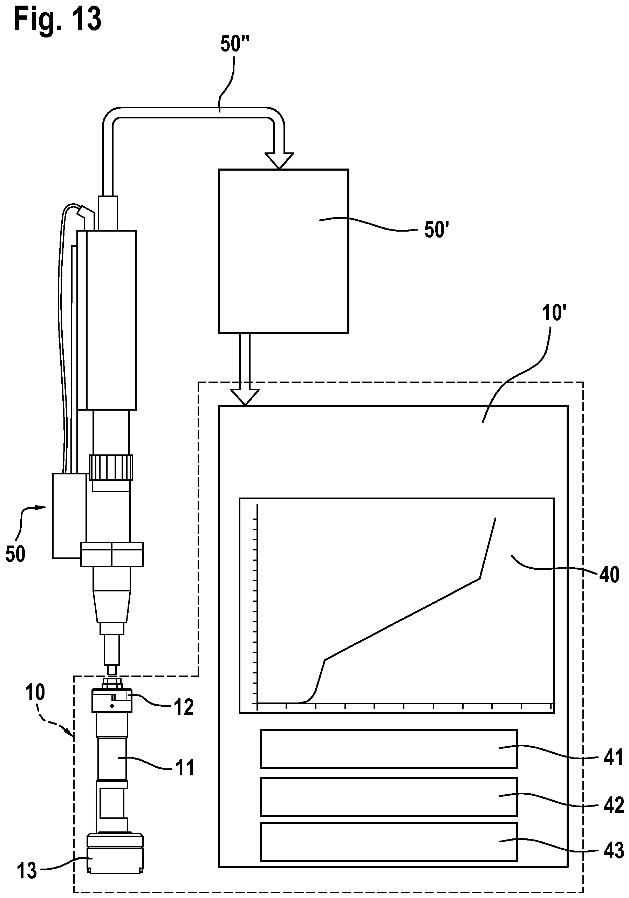

Fig. 13 veranschaulicht in einer schematischen Darstellung eine erste Ausführungsvariante der erfindungsgemäßen Prüfvorrichtung 10 zusammen mit einer zu prüfenden Schraubspindel 50. Dabei ist die Schraubspindel 50 mit ihrem Ende auf das sechskantig ausgebildete Ende 16 der Prüfvorrichtung 10 aufgesteckt. Über eine zur Schraubspindel gehörende Steuerungseinheit 50', die mit der Schraubspindel 50 über eine Signalleitung 50" elektronisch verbunden ist, fährt die Schraubspindel schrittweise einen Drehwinkelbereich durch und misst für jeden eingestellten Drehwinkel das beim Drehen der Prüfvorrichtung 10 aufgebrachte Drehmoment. Die erfassten Messdaten werden an eine zur Prüfvorrichtung 10 gehörende extern operierende Verarbeitungseinheit 10' übertragen und von letzterer verarbeitet, ausgewertet und angezeigt. Dazu weist die Verarbeitungseinheit 10', die als speicherprogrammierbare Steuerung oder als Rechner ausgebildet sein kann, ein Anzeigefenster 40 zur graphischen Darstellung der die erfassten Messdaten wiedergebenden Messkurve mit den die Kennlinie der Prüfvorrichtung begrenzenden Eckmesspunkten S1 und S2 sowie darunter angeordnete Anzeigefelder 41, 42, 43 auf. Im Anzeigefeld 41 wird der den Eckmesspunkt S1 charakterisierende Drehmomentwert ausgegeben, während im darunter angeordneten Anzeigefeld 42 der den Eckmesspunkt S2 charakterisierende Drehmomentwert angezeigt wird. Das darunter angeordnete Anzeigefeld 43 dient zur Anzeige bzw. Ausgabe der anhand der ausgewerteten Messkurve ermittelten Abweichung in Grad.

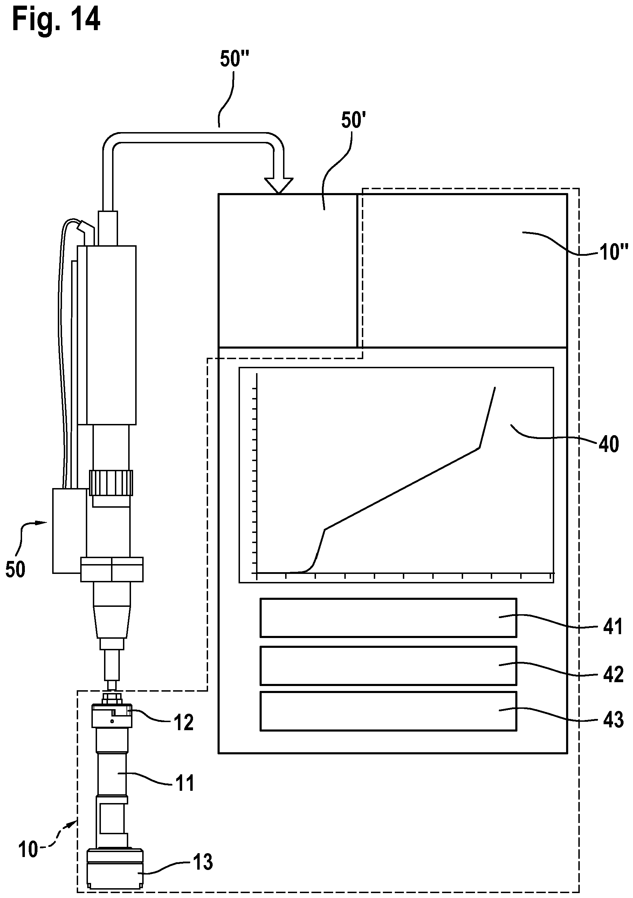

Fig. 14 veranschaulicht in einer schematischen Darstellung eine zweite Ausführungsvariante der erfindungsgemäßen Prüfvorrichtung 10 zusammen mit einer zu prüfenden Schraubspindel 50. Die zweite Ausführungsvariante unterscheidet sich von der in Fig. 13 dargestellten Ausführungsvariante darin, dass anstelle der extern operierenden Verarbeitungseinheit ein Bewertungsmodul 10" vorgesehen ist, welches in der Steuerungseinheit 50' der Schraubspindel 50 integriert aufgenommen ist. Das Bewertungsmodul 10" übt dabei dieselben Funktionen aus wie die Verarbeitungseinheit 10' und verfügt über die Anzeigefelder 40 bis 43 zur graphischen Ausgabe der Messkurve mit den die Kennlinie der Prüfvorrichtung begrenzenden Eckmesspunkten und zur Ausgabe der dazu korrespondierenden Drehmomentwerte sowie des anhand der ausgewerteten Messkurve ermittelten Abweichung.

Zusammenfassend wird beim erfindungsgemäßen Verfahren zunächst ein Drehmomentsverlauf einer zu prüfenden Schraubspindel in die Prüfvorrichtung 10 eingeleitet, worauf eine Auswertung von den Drehmomentverlauf charakterisierenden Messdaten der zu prüfenden Schraubspindel erfolgt, wobei anhand der ausgewerteten Messdaten und der darin aufgeprägten Federkennlinie zumindest eine mit der vorbestimmten Vorspannung korrespondierende Stützstelle des Drehmomentverlaufs als Maß zum Bewerten eines von der Norm abweichenden Verhaltens der Schraubspindel ermittelt wird. Dazu wird die dem Drehmomentverlauf aufgeprägte Federkennlinie des Torsionselements der Prüfvorrichtung anhand von Fixpunkten S1 und S2 bestimmt, wobei die Fixpunkte S1 und S2 als charakteristische Stützstellen gemäß Gleichung (1) der Berechnung einer Abweichung der Schraubspindel von der Norm zugrundegelegt werden. Die erfindungsgemäße Prüfvorrichtung 10 weist ein Torsionselement 12 auf, das mit einer vorbestimmten Vorspannung versehen in einem Grundkörper 11 aufgenommen ist und dazu dient, bei Einwirken eines von einer zu prüfenden Schraubspindel bewirkten Drehmomentverlaufs auf das Torsionselement 12 eine Federkennlinie dem Drehmomentverlauf der Schraubspindel aufzuprägen, wobei die Federkennlinie einerseits durch eine durch die vorbestimmte Vorspannung definierte erste Anschlagstellung und andererseits durch eine zweite Anschlagstellung, also die Endanschlagstellung, festgelegt bzw. begrenzt ist, wobei Mittel 10' bzw. 10" vorgesehen sind, um den Drehmomentverlauf der Schraubspindel charakterisierende Messdaten auszuwerten, indem anhand der ausgewerteten Messdaten und der darin aufgeprägten Federkennlinie zumindest zwei Stützstellen des Drehmomentverlaufs als Maß zum Bewerten eines von der Norm abweichenden Verhaltens der Schraubspindel dienen. Diese beiden Stützstellen korrespondieren mit den beiden Anschlagstellungen des Torsionselements.

Mithin ist es mit der erfindungsgemäßen Prüfvorrichtung 10 und dem erfindungsgemäßen Prüfverfahren möglich, auch die Einflussgrößen wie Schlupf und Eigentorsion einer Schraubspindel zu erfassen. Dadurch sind bei einem zyklischen Betrieb der Erfindung nicht nur Veränderungen der Messgrößen (Drehmoment und Drehwinkel) der Schraubspindel, sondern auch solche Veränderungen erfassbar, die durch Verschleiß des Schraubsystems bzw. Schraubwerkzeugs verursacht werden. Da die Erfindung - im Unterschied zum Stand der Technik - ferner alle bekannten Einflussgrößen, d.h. die Eigentorsion und der Schlupf der Schraubspindel sowie gegebenenfalls die Nachgiebigkeit der die Prüfvorrichtung haltenden Maschine, bewertet, führt dies zu einer hohen Messgenauigkeit.

**Patentansprüche**

1.   Prüfvorrichtung zum Prüfen von Schraubspindeln, welche zur Montage von Schraubverbänden oder Schraubstellen vorgesehen sind, wobei die Prüfvorrichtung (10) zum Einbau zwischen einem Abtrieb einer zu prüfenden Schraubspindel und einer Schraubstelle vorgesehen ist, wobei die Prüfvorrichtung (10) ein Torsionselement (12) aufweist, das mit einer vorbestimmten Vorspannung versehen in einem Grundkörper (11) aufgenommen ist und dazu dient, bei Einwirken eines von einer zu prüfenden Schraubspindel bewirkten Drehmomentverlaufs auf das Torsionselement (12) eine Federkennlinie des Torsionselements (12) dem Drehmomentverlauf der Schraubspindel aufzuprägen, wobei die Federkennlinie des Torsionselements durch eine erste Anschlagstellung und eine zweite Anschlagstellung festgelegt ist, wobei Mittel vorgesehen sind, um den Drehmomentverlauf der Schraubspindel charakterisierende Messdaten auszuwerten, wobei anhand der ausgewerteten Messdaten und der darin aufgeprägten Federkennlinie mit den Anschlagstellungen korrespondierende und die Federkennlinie festlegende Stützstellen des Drehmomentverlaufs als Maß zum Bewerten eines von der Norm abweichenden Verhaltens der Schraubspindel dienen, wobei das Torsionselement (12) unter der vorbestimmten Vorspannung derart in dem Grundkörper (11) aufgenommen ist, dass das Torsionselement (12) ohne äußere Krafteinwirkung in seiner ersten Anschlagstellung mit einer Anschlagfläche (17') gegen eine Anschlagfläche (18') des Grundkörpers (11) in Anschlag gestellt ist und unter Einwirkung einer die vorbestimmte Vorspannung überwindenden äußeren Kraft aus der ersten Anschlagstellung heraus in Richtung einer zweiten Anschlagfläche (18") des Grundkörpers (11) bewegbar ist und wobei das Torsionselement (12) aus seiner ersten Anschlagstellung heraus bis zur zweiten Anschlagstellung bewegbar ist, bei der eine zweite Anschlagfläche (17") des Torsionselements (12) gegen die zweite Anschlagfläche (18") des Grundkörpers (11) anschlägt.

2. Prüfvorrichtung nach Anspruch 1, **dadurch gekennzeichnet, dass** in Ruhestellung des Torsionselements (12) zwischen seiner zweiten Anschlagfläche (17") und der dazu korrespondierenden Anschlagfläche (18") des Grundkörpers (11) eine Abstandslücke (30) vorhanden ist.

3. Prüfvorrichtung nach einem der vorherigen Ansprüche, **dadurch gekennzeichnet, dass** ein Ende (25) des Torsionselements (12) mittels eines Einstellkörpers an dem Grundkörper (11) kraftschlüssig und/oder formschlüssig verankert ist.

4. Prüfvorrichtung nach Anspruch 3, **dadurch gekennzeichnet, dass** das Ende (25) des Torsionselements (12) in dem Einstellkörper (13) drehfest verankert ist, wobei der Einstellkörper (13) mit dem Grundkörper (11) verbunden ist.

5. Prüfvorrichtung nach Anspruch 1, **dadurch gekennzeichnet, dass** das Torsionselement (12) einen sich längsaxial erstreckenden länglichen Schaftbereich (24) aufweist.

6. Prüfvorrichtung nach Anspruch 1, **dadurch gekennzeichnet, dass** die Längsmittelachse des Torsionselements (12) koaxial zur Längsmittelachse (15) des Grundkörpers (11) verläuft.

7. Prüfvorrichtung nach Anspruch 1, **dadurch gekennzeichnet, dass** das Torsionselement (12) einstückig ausgebildet ist.

8. Verfahren zum Prüfen von Schraubspindeln unter Verwendung der Prüfvorrichtung nach einem der Ansprüche 1 bis 7 mit folgenden Schritten:

- Einleiten eines Drehmomentsverlaufs einer zu prüfenden Schraubspindel in die Prüfvorrichtung, und
- Auswerten von den Drehmomentverlauf charakterisierenden Messdaten der zu prüfenden Schraubspindel, wobei anhand der ausgewerteten Messdaten und der darin aufgeprägten Federkennlinie die Federkennlinie festlegende und mit Anschlagstellungen des Torsionselements korrespondierende Stützstellen des Drehmomentverlaufs als Maß zum Bewerten eines von der Norm abweichenden Verhaltens der Schraubspindel ermittelt werden.

9. Verfahren nach Anspruch 8, **dadurch gekennzeichnet, dass** die dem Drehmomentverlauf aufgeprägte Federkennlinie des Torsionselements der Prüfvorrichtung anhand von Fixpunkten bestimmt wird, wobei die Fixpunkte als mit den Anschlagstellungen des Torsionselements korrespondierende charakteristische Stützstellen zur Berechnung einer Abweichung der Schraubspindel von der Norm bei vorbekannter Eigentorsion und vorbekanntem Schlupf anhand der nachstehenden Gleichung herangezogen werden:

$$W3 = (W2 - W1) - ((M2 - M1) \bullet tsf)$$

wobei mit W3 die Abweichung der Schaubspindel, mit den Größen M1 und W1 das Drehmoment und der zugehörige Drehwinkel einer ersten charakteristischen Stützstelle und mit den Größen M2 und W2 das Drehmoment und der zugehörige Drehwinkel einer zweiten charakteristischen Stützstelle sowie mit tsf die Eigentorsion und der Schlupf der Schraubspindel bezeichnet sind.

## Claims

1. Testing device for testing jack screws which are provided for assembling screw connections or screw points, wherein the testing device (10) is provided for installation between a drive output of a jack screw to be tested and a screw point, wherein the testing device (10) has a torsion element (12) which, provided with a predetermined preload, is received in a main body (11) and under the effect of a torque profile caused by a jack screw to be tested acting on the torsion element (12) serves for imposing a spring characteristic of the torsion element (12) on the torque profile of the jack screw;

wherein the spring characteristic of the torsion element is established by a first detent position and a second detent position, wherein means for evaluating measured data that characterizes the torque profile of the jack screw are provided; wherein by means of the evaluated measured data and the spring characteristic imposed therein supporting points of the torque profile that correspond to the detent positions and establish the spring characteristic serve for evaluating a behaviour of the jack screw that deviates from the standard specification;

wherein the torsion element (12) under the predetermined preload is received in the main body (11) in such a manner that the torsion element (12) in the first detent position thereof, without the effect of any external force, by way of a detent face (17') is set so as to impact on a detent face (18') of the main body (11), and under the effect of an external force that overcomes the predetermined preload is movable from the first detent position in the direction of a second detent face (18") of the main body (11); and

wherein the torsion element (12) is movable from the first detent position thereof up to the second detent position in which a second detent face (17") of the torsion element (12) impacts the second detent face (18") of the main body (11).

2. Testing device according to Claim 1, **characterized in that** in the resting position of the torsion element (12) a spacing gap (30) is present between the second detent face (17") of said torsion element (12) and the corresponding detent face (18") of the main body (11).

3. Testing device according to one of the preceding claims, **characterized in that** an end (25) of the torsion element (12) by means of a setting member is anchored in a force-fitting and/or form-fitting manner on the main body (11).

4. Testing device according to Claim 3, **characterized in that** the end (25) of the torsion element (12) is anchored in a rotationally fixed manner in the setting member (13), wherein the setting member (13) is connected to the main body (11).

5. Testing device according to Claim 1, **characterized in that** the torsion element (12) has an elongate shank region (24) which extends in longitudinal-axial manner.

6. Testing device according to Claim 1, **characterized in that** the longitudinal central axis of the torsion element (12) runs so as to be coaxial with the longitudinal central axis (15) of the main body (11) .

7. Testing device according to Claim 1, **characterized in that** the torsion element (12) is configured so as to be formed in one piece.

8. Method for testing jack screws while using the testing device according to one of Claims 1 to 7, said method comprising the following steps:

   - introducing a torque profile of a jack screw to be tested into the testing device; and
   - evaluating measured data of the jack screw to be tested that characterizes the torque profile, wherein by means of the evaluated measured data and the spring characteristic imposed therein the supporting points of the torque profile that establish the spring characteristic and correspond to detent positions of the torsion element are ascertained as the measure for evaluation of a behaviour of the jack screw that deviates from the standard specification.

9. Method according to Claim 8, **characterized in that** the spring characteristic of the torsion element of the testing device that is imposed on the torque profile is determined by means of fixed points, wherein the fixed points as characteristic supporting points that correspond to the detent positions of the torsion element, in the case of a previously known inherent torsion and a previously known slack, are resorted to for calculating a deviation of the jack screw from the standard specification by means of the following equation:

$$W3 = (W2 - W1) - ((M2 - M1) \bullet tsf)$$

wherein W3 refers to the deviation of the jack screw, the variables M1 and W1 refer to the torque and the associated rotation angle of a first characteristic supporting point, and the variables M2 and W2 refer to the torque and the associated rotation angle of a second characteristic supporting point, and tsf refers to the inherent torsion and the slack of the jack screw.

**Revendications**

1. Dispositif de test pour tester des broches à vis qui sont destinées au montage d'ensembles de vissage ou de points de vissage, dans lequel le dispositif de test (10) est prévu pour être installé entre un côté mené d'une broche à vis à tester et un emplacement de vissage, dans lequel le dispositif de test (10) comporte un élément de torsion (12) qui est logé dans un corps de base (11), soumis à une précontrainte prédéterminée, et qui sert, lorsqu'une courbe de couple provoquée par une broche à vis à tester agit sur l'élément de torsion (12), à conférer une caractéristique de ressort de l'élément de torsion (12) à la courbe de couple de la broche à vis, dans lequel la caractéristique de ressort de l'élément de torsion est définie par une première position d'arrêt et une seconde position d'arrêt, dans lequel il est prévu des moyens pour évaluer des données de mesure caractérisant la courbe de couple de la broche à vis, dans lequel, sur la base des données de mesure évaluées et de la caractéristique de ressort qui lui est conférée, des emplacements d'appui de la courbe de couple qui correspondent aux positions d'arrêt et définissent la caractéristique de ressort servent de mesure pour évaluer un comportement s'écartant de la norme de la broche à vis, dans lequel l'élément de torsion (12) est logé dans le corps de base (11) sous la précontrainte prédéterminée de manière à ce que l'élément de torsion (12) soit, dans sa première position d'arrêt, positionné de façon qu'une surface d'arrêt (17') soit en butée contre une surface d'arrêt (18') du corps de base (11) sans l'action d'une force extérieure et puisse être déplacé hors de la première position d'arrêt en direction d'une seconde surface d'arrêt (18") du corps de base (11) sous l'action d'une force extérieure surmontant la précontrainte prédéterminée et dans lequel l'élément de torsion (12) peut être déplacé de sa première position d'arrêt à la seconde position d'arrêt, à laquelle une seconde surface d'arrêt (17") de l'élément de torsion (12) vient en butée contre la seconde surface d'arrêt (18") du corps de base (11) .

2. Dispositif de test selon la revendication 1, **caractérisé en ce que**, dans la position de repos de l'élément de torsion (12), il existe un espacement (30) entre sa seconde surface d'arrêt (17") et la surface d'arrêt (18") qui lui correspond du corps de base (11).

3. Dispositif de test selon l'une des revendications précédentes, **caractérisé en ce qu'**une extrémité (25) de l'élément de torsion (12) est ancrée par complémentarité de force et/ou par complémentarité de forme sur le corps de base (11) au moyen d'un corps de réglage.

4. Dispositif de test selon la revendication 3, **caractérisé en ce que** l'extrémité (25) de l'élément de torsion (12) est ancrée de manière fixe en rotation dans le corps de réglage (13), dans lequel le corps de réglage (13) est relié au corps de base (11).

5. Dispositif de test selon la revendication 1, **caractérisé en ce que** l'élément de torsion (12) présente une zone d'arbre allongée (24) s'étendant axialement dans le sens longitudinal.

6. Dispositif de test selon la revendication 1, **caractérisé en ce que** l'axe central longitudinal de l'élément de torsion (12) s'étend coaxialement à l'axe central longitudinal (15) du corps de base (11).

7. Dispositif de test selon la revendication 1, **caractérisé en ce que** l'élément de torsion (12) est réalisé en une seule pièce.

8. Procédé pour tester des broches à vis en utilisant le dispositif de test selon l'une des revendications 1 à 7, comprenant les étapes suivantes :

   - l'introduction d'une courbe de couple d'une broche à vis à tester dans le dispositif de test, et
   - l'évaluation de données de mesure caractérisant la courbe de couple de la broche à vis à tester, dans lequel, sur la base des données de mesure évaluées et de la caractéristique de ressort qui lui est conférée, des emplacements d'appui de la courbe de couple qui définissent la caractéristique de ressort et correspondent à des positions d'arrêt de l'élément de torsion sont déterminés en tant que mesure pour évaluer un comportement s'écartant de la norme de la broche à vis.

9. Procédé selon la revendication 8, **caractérisé en ce que** la caractéristique de ressort de l'élément de torsion du dispositif de test, qui est conférée à la courbe de couple, est déterminée sur la base de points fixes, dans lequel les points fixes sont utilisés en tant qu'emplacements d'appui caractéristiques correspondant aux positions d'arrêt de l'élément de torsion pour calculer un écart par rapport à la norme de la broche à vis dans le cas où la torsion propre est connue et où le glissement est connu, conformément à l'équation suivante :

$$W3 = (W2 - W1) - ((M2 - M1) \cdot tsf)$$

où W3 désigne l'écart de la broche à vis, les variables M1 et W1 désignent le couple et l'angle de rotation associé d'un premier emplacement d'appui caractéristique, et où les variables M2 et W2 désignent le couple et l'angle de rotation associé d'un second emplacement d'appui caractéristique, et tsf désigne la torsion propre et le glissement de la broche à vis.

**Fig. 1**

**Fig. 2**

16

I    I

10

18

12

15

11

29

14

13

**Fig. 3**

18'      17'

10

11

32

32

12

18''      17''

# Fig. 4

**Fig. 5**

# Fig. 6

## Fig. 7

16
17"
17
20
23
12
17'
24
25

## Fig. 8

18'
17'
10
11
12
32
18"
32
17"
30

Fig. 9

## Fig. 10

EP 3 161 445 B1

## Fig. 11

EP 3 161 445 B1

## Fig. 12

EP 3 161 445 B1

**Fig. 13**

# Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202011050771 U1